# EUROPEAN PATENT APPLICATION

(11) **EP 2 117 238 A1**
(43) Date of publication of application: **11.11.2009**
(21) Application number: 08757782.1
(22) Date of filing: 19.06.2008
(51) Int. Cl.: H04Q 7/20

(54) **A DETERMINATION METHOD AND DEVICE FOR A TERMINAL DEVICE MEASURING THE RESTRICTED NETWORK**

(30) Priority: 20.06.2007 CN 200710117635
(71) Applicant: Huawei Technologies Co., Ltd., Longgang District, Shenzhen Guangdong 518129 (CN)
(72) Inventor: XIE, Boyun, Shenzhen (CN); YU, Chengyu, Shenzhen (CN); HUANG, Yinghua, Shenzhen (CN); YU, Chang, Shenzhen (CN)
(74) Representative: Kreuz, Georg Maria
(86) International application number: PCT/CN2008/071373
(87) International publication number: WO 2008/154879

(57) **Abstract**

A determination method and an apparatus for a UE measuring a restricted network are provided. To be specific, the method includes obtaining the location information of the restricted network and/or user equipment (UE), and determining whether the UE starts measuring the restricted network or not. Thus, the method can correctly determine the occasion for the UE to start measuring the restricted network, reduce the blindness of the measurement, and reduce the measurement burden of the UE.

## Description

### FIELD OF THE INVENTION

The present invention relates to the field of mobile communication, and more particularly to a determination method and a determination apparatus for a user equipment measuring a restricted network.

### BACKGROUND OF THE INVENTION

So far, the mobile communication system has been developed to the third generation, and in order to maintain the long-term competitive advantage, the standard-setting work for a long-term evolution (LTE) system has been making progress. Along with the rapid development of the mobile communication system, users' demands have become diversified, and accordingly, various system devices are proposed to cater to the users' demands, including widely concerned home indoor coverage base stations, enterprise-class internal coverage base stations, as well as some other restricted networks. The restricted networks include Home NodeB, Home Cell, Access Point, Private Network, Private Cell, and Closed Subscriber Group (CSG), and definitely include restricted networks in certain specific frequency layers, which are characterized in that only those users with the privilege of the current network are allowed to stay resident in the network or access the network, and meanwhile the users are further required to stay resident in the public network or access the public network.

Because each restricted network has a small coverage, and a large number of home indoor coverage base stations are provided especially, the user equipment (UE) in the restricted networks needs to be effectively managed. The restricted network merely allows a few UEs with the privilege to stay resident in the network or access the network. Thus, the UEs without the privilege of staying resident or accessing the restricted network should try to reduce or avoid the measurement operation on the restricted network, whereas the UEs with the privilege of staying resident or accessing the restricted network should start the measurement on the restricted network at an accurate occasion, so as to avoid excessive invalid measurements.

Currently, the procedure of measuring the restricted network by the UE may be realized through the following two methods.
1) In a realizing method commonly used in the prior art, a macro cell allocates all the neighboring private network cells into a neighbor cell list of the macro cell as neighbor cells, and delivers the neighbor cell list to the UEs in the macro cell through a broadcasting message. The UEs measure the restricted networks according to the neighbor cell list and try to access the restricted networks.
   This method may cause a problem that the UE belonging to a certain restricted network cannot correctly determine the exact time to measure the restricted network where the UE itself has the privilege, so that the UE may usually conduct some useless measurements, and thus the measurement burden of the UE is increased.
2) The second method is to store a tracking area (TA) identity list of restricted network cells allowed to be accessed in the UE. When the method of multiple TA is employed, each macro cell merely belongs to one TA, and only one TA is broadcasted in the macro cell. According to the TA of the current macro cell together with the stored TA list of restricted network cells, the UE can determine whether to start the measurement on the restricted network or not.

The aforementioned method is based on the granularity of TA. When the macro cell where the UE enters and the stored TA of the restricted network cell are in a neighboring relation or the TA of the restricted network is covered by the TA of the macro cell, the UE determines to start the measurement on the restricted network, and then starts to measure the restricted network. Unfortunately, the granularity of such measurement is too large, and the restricted network has a small coverage, so that the UE can not find the restricted network all the time if starting the measurement at this time, i.e., the UE performs invalid measurements.

The following problem has become apparent in the related art. In the scenario of a coexistence of the restricted network and the public network, the UE in the macro cell cannot accurately determine the occasion for measuring the restricted network, which thus has certain blindness.

### SUMMARY OF THE INVENTION

The present invention provides a determination method and a determination apparatus for a UE measuring a restricted network, which enable the UE to accurately determine the occasion to start measuring a restricted network cell, so as to reduce the blindness of the measurement, and reduce the measurement burden of the UE.

In respective implementation forms of the present invention, the following technical solutions are realized.

A determination method for a UE measuring a restricted network includes: obtaining location information of the restricted network and UE; and determining whether the UE starts measuring the restricted network or not according to the obtained location information.

The present invention further provides a determination apparatus for a UE measuring a restricted network, which in one implementation form includes a location information obtaining unit, a location information analysis unit, and a starting measuring judgment unit. The location information obtaining unit is configured to obtain location information of the restricted network and UE. The location information analysis unit is configured to analyze the obtained location information. The starting measuring judgment unit is configured to determine whether the UE starts measuring the restricted network or not according to an analysis result.

The present invention still further provides a determination system for a UE measuring a restricted network, which in one implementation form includes a measuring determining apparatus, configured to obtain location information of the restricted network and UE, and determine whether the UE starts measuring the restricted network or not according to the location information.

According to the above technical solutions provided by the present invention, the location information of the restricted network and UE is obtained, and an occasion of the UE to start measuring the restricted network is determined according to the obtained location information of the restricted network and UE. By the implementation of the technical solutions of the present invention, an occasion for the UE to start measuring a restricted network cell can be correctly determined so as to reduce the blindness of the measurement, and reduce the measurement burden of the UE.

### BRIEF DESCRIPTION OF THE DRAWINGS

FIG. 1 is a flow chart of a determination method according to an embodiment of the present invention;
FIG. 2 (a) is a schematic structural view of obtaining location information of a restricted network according to an embodiment of the present invention;
FIG. 2 (b) is another schematic structural view of obtaining location information of the restricted network according to an embodiment of the present invention;
FIG. 2 (c) is a third schematic structural view of obtaining location information of the restricted network according to an embodiment of the present invention;
FIG. 2 (d) is a schematic structural view of obtaining updated location information of a restricted network according to an embodiment of the present invention;
FIG. 3 is a schematic structural view of a determination apparatus according to an embodiment of the present invention; and
FIG. 4 is a schematic view of structures and locations of detailed embodiments according to the present invention.

### DETAILED DESCRIPTION OF THE EMBODIMENTS

Various embodiments of the present invention provide a determination method and a determination apparatus for a UE measuring a restricted network. In the scenario of a coexistence of the restricted network and the public network, the occasion for the UE in the macro cell to measure the restricted network is of great importance. Furthermore, the accurate determination of the measuring occasion basically requires figuring out whether the UE is sufficiently close to a restricted network cell at the start time of the measurement. That is, the location information of the restricted network cell needs to be obtained, and the UE obtains its own location information according to a location process, and then starts measuring the restricted network if a certain criterion is satisfied.

In order to describe the embodiments of the present invention in a better way, a detailed description of the embodiments of the present invention is given below with reference to the accompanying drawings.

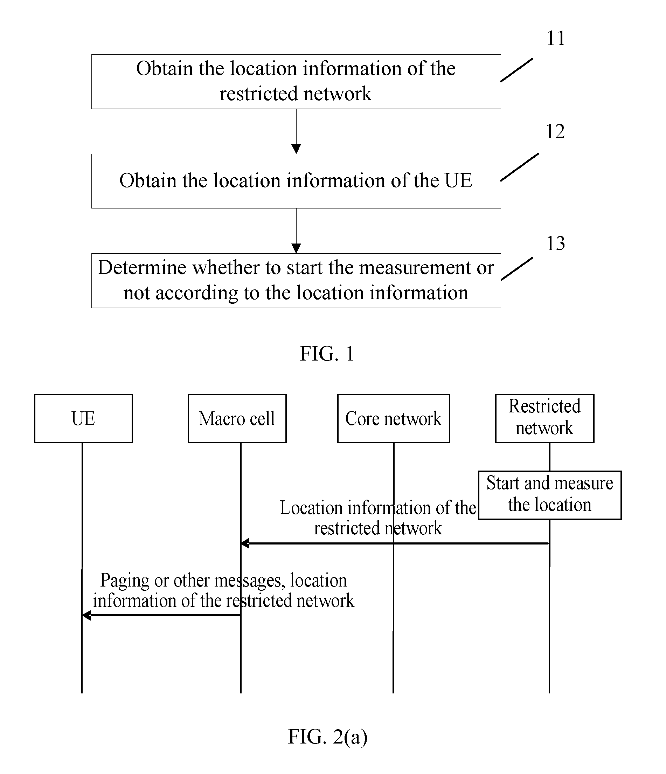

FIG. 1 is a flow chart of a determination method according to an embodiment of the present invention, which includes the following steps.

Step 11: Location information of the restricted network is obtained.

The location information of the restricted network includes two types, namely, absolute location information and relative location information. The absolute location information may be latitude and longitude information of the restricted network on the earth. If the restricted network supports the positioning by a global positioning system (GPS), the restricted network obtains the latitude and longitude information through the measurement by using the GPS. Otherwise, the latitude and longitude information may be calculated by using allocation information or other manners. The relative location information may be a location identifier of the restricted network, i.e., includes a pubic land mobile network (PLMN) ID, cell ID, TA ID of the restricted network, or the relative location information may be neighboring relation information which relates to the restricted network and the networks, i.e. the neighboring relation information which relates to the restricted network and a cell, or TA of other networks.

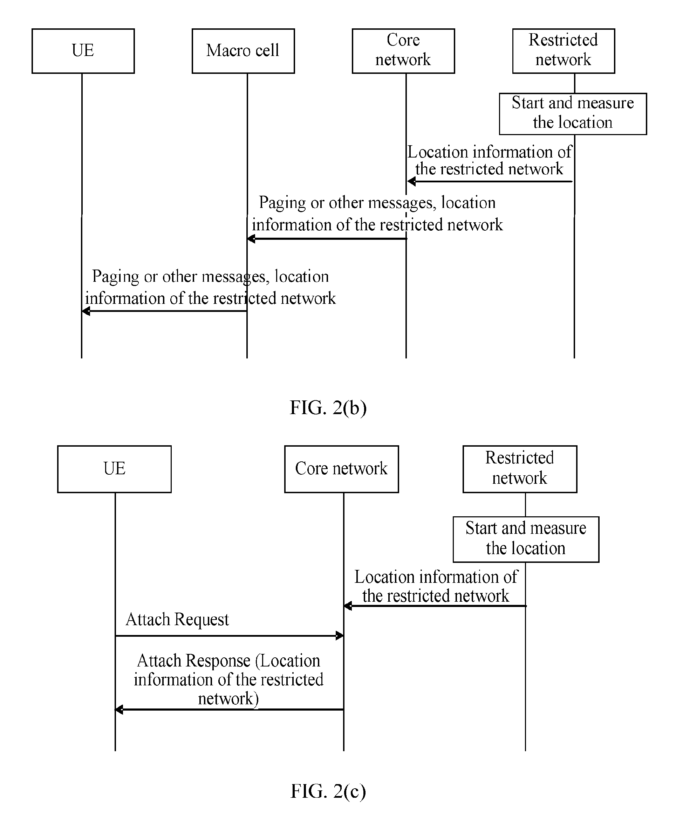

After being started, the restricted network carries out a location measurement, and delivers the measured location information, including the absolute location information and/or relative location information to the UE. The methods for the UE to obtain the location information of the restricted network are listed as follows.
1) As shown in FIG. 2 (a), the restricted network firstly delivers the measured location information to the macro cell, and then the macro cell delivers the location information to the UE. In each stage, the information transmission may be realized through paging message, dedicated signaling message for RRC connection, handover complete message, TA update acknowledgement message, cell update acknowledgement message, or other signaling messages.
2) As shown in FIG. 2 (b), the restricted network firstly reports the measured location information to a core network, then the core network delivers the location information to the macro cell, and then the macro cell delivers the location information to the UE. Likewise, in each stage, the information transmission may be realized through paging message, dedicated signaling message for RRC connection, handover complete message, TA update acknowledgement message, cell update acknowledgement message, or other signaling messages.
3) As shown in FIG. 2 (c), the restricted network firstly reports the measured location information to the core network, and then the UE obtains the location information of the restricted network from the core network through an Attach operation. Specifically, the UE sends an Attach Request to the core network, and then the core network returns an Attach Response carrying the location information of the restricted network to the UE after receiving the Attach Request, so that the UE obtains the location information of the restricted network.

In addition, the user may also directly input the measured location information to the UE via an interface provided by the UE.

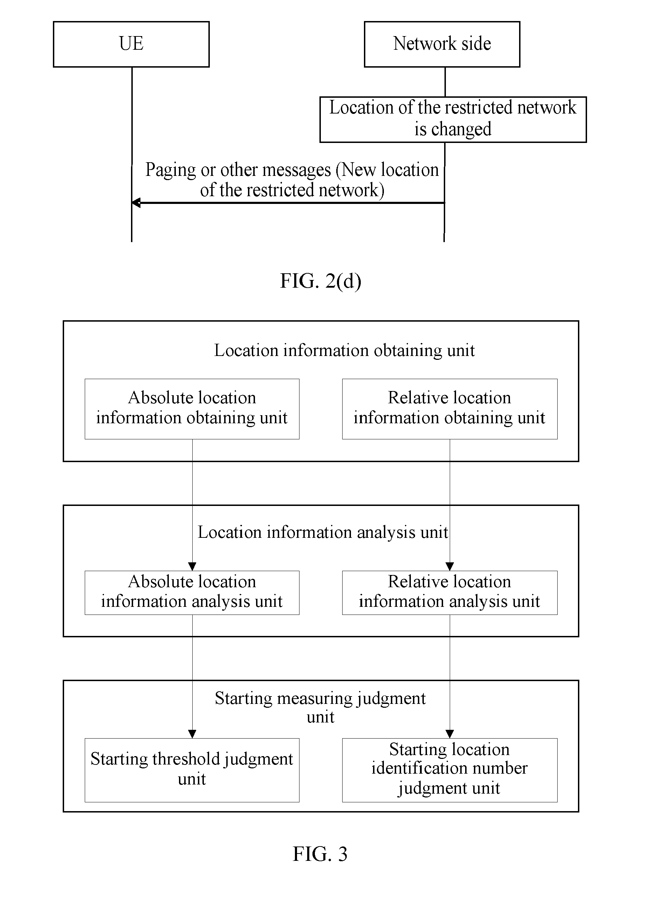

Furthermore, when acquiring that the location information of the restricted network is changed, the network side needs to inform the UE of making a change. In this case, the informing message may also be paging message, dedicated signaling message for RRC connection, handover complete message, TA update acknowledgement message, cell update acknowledgement message, or other signaling messages. A schematic structural view of obtaining updated location information of a restricted network is as shown in FIG. 2 (d).

The user may also directly change the updated location information via the interface provided by the UE.

Step 12: Location information of the UE is obtained.

The location information of the UE also includes two types, namely, absolute location information and relative location information. The absolute location information may be latitude and longitude information of the current location of the UE on the earth. If the UE supports the positioning by the GPS, the UE obtains the current latitude and longitude information through the measurement by the GPS positioning. The relative location information may be a location identifier of a current macro cell where the UE is located , i.e., the identifier information of the current macro cell where the UE is located, such as PLMN ID information, Cell ID information, TA ID information of the current macro cell, or the relative location information may be the common coverage location information of a plurality of neighboring macro cells.

The specific locating methods may be selected according to the location information of the restricted network obtained by the UE and the capability of the UE itself. Several situations for selecting the locating methods by the UE are listed hereinafter.
1) If the UE supports the GPS, and has obtained the latitude and longitude information of the restricted network, the UE may select to perform the GPS measurement and determine its own location. For example, the UE may perform the periodical GPS measurements, and obtain the absolute location information of the UE itself periodically.
2) If the UE has obtained a location identifier of the restricted network as relative location information of the restricted network, e.g., obtaining the information of macro cells, wherein these macro cells are adjacent to the restricted network, the UE may select the locating method based on the cell ID, and specifically, the UE employs a multipoint locating method to determine the relative location information of the UE through measuring signals of two or more macro cells.

Furthermore, if the UE supports the locating method of observed time difference of arrival (OTDOA), the UE may also adopt the locating method of OTDOA to measure and obtain the current location information of the UE itself. In addition, the UE may also employ other locating methods, e.g., a method of uplink time of arrival (UL-TOA), or combine the above several methods to obtain its own location information.

Step 13: It is determined whether the UE starts measuring the restricted network or not according to the location information.

For the obtained different location information, different measurement starting criteria may be used. When a certain measurement starting criterion is satisfied, the UE may start the measurement on the restricted network.

If the UE has obtained the GPS absolute location information of the restricted network, and the UE itself supports the GPS positioning technology, the UE may perform the GPS positioning measurement to obtain its own absolute location information. Comparing the absolute location information of the restricted network and the absolute location information of the UE, if a distance between the UE and the restricted network is less than or equal to a starting distance threshold, the UE starts the measurement on the restricted network. The distance may be an absolute spatial distance there-between, and the starting distance threshold may be flexibly set according to the coverage area of the restricted network or network planning, e.g., may be set as 50 m.

If the UE has obtained the location identifier of the restricted network as the relative location information, e.g., obtaining the information of macro cells, wherein these macro cells are adjacent to the restricted network, the UE may adopt the locating method based on the cell ID. Specifically, when the UE has obtained the location identifier(s) of one or more macro cell(s) which is adjacent to the restricted network, i.e., the UE may detect signal and obtain the cell identity of one or more macro cells, which these macro cells are adjacent to the restricted network, the UE starts measuring the restricted network. The number of measured macro cell signals may be determined depending upon the capability of the UE, e.g., may be set as one or three.

Furthermore, if the UE employs the locating technology of OTDOA, a distance between the UE and the restricted network is calculated through this locating technology, and when the calculated distance is less than or equal to the starting distance threshold, the UE starts measuring the restricted network.

In addition, an interface key may be configured on the UE, and when the user judges that the UE gets close to the restricted network, the measurement on the restricted network is directly started via the interface key.

Meanwhile, besides the aforementioned judging criteria, the obtained location information of either the restricted network or the UE may be used to determine whether to start the measurement or not. For example, if the position of the restricted network is fixed, by periodically obtaining the location information of the UE, the proximity relation between the UE and the restricted network may be obtained through detection and analysis. When the proximity relation there-between reaches a set distance, it is judged to start the measurement on the restricted network. If the position of the UE is fixed, the same manner may be adopted to make analysis and judgment.

If the UE can not find the restricted network within a certain period after starting the measurement on the restricted network, a dedicated signaling may be used to obtain the state of the restricted network or to start the restricted network.

In an embodiment, the present invention further provides a determination apparatus for a UE measuring a restricted network. FIG. 3 is a schematic structural view of a determination apparatus, which includes a location information obtaining unit, a location information analysis unit, and a starting measuring judgment unit. The location information obtaining unit is configured to obtain location information of the restricted network and the UE. The location information includes absolute location information and relative location information. The absolute location information may be latitude and longitude information of the restricted network and the UE on the earth. The relative location information may be a location identifier of the restricted network, and a location identifier of a current macro cell where the UE is located.

The location information obtaining unit may include an absolute location information obtaining unit and/or a relative location information obtaining unit. The absolute location information obtaining unit is configured to obtain the absolute location information of the latitude and longitude of the restricted network and the UE on the earth. The relative location information obtaining unit is configured to obtain the location identifier of the restricted network which regarded as the relative location information of the restricted network, and obtain the location identifier of the current macro cell where the UE is located, and the location identifier of the current macro cell is regarded as the relative location information. The various manners for obtaining the location information have been described above.

The location information analysis unit is configured to compare or analyze the obtained location information, and the comparing or analyzing manners are different according to the obtained different location information. The location information analysis unit may include an absolute location information analysis unit and/or a relative location information analysis unit. The absolute location information analysis unit is configured to compare or analyze the obtained absolute location information to obtain a distance between the restricted network and the UE, in which the distance may be an absolute spatial distance there-between. The relative location information analysis unit is configured to compare or analyze the obtained relative location information to acquire the identification number of the location identifiers of the macro cells which is adjacent to the restricted network, i.e., acquiring the number of the measured signals of the macro cells. The macro cells are adjacent to the restricted network.

The starting measuring judgment unit is configured to determine whether the UE starts measuring the restricted network or not according to the comparing or analysis results. The judgment manners are different according to different types of comparing or analysis results. The starting measuring judgment unit may include a starting threshold judging unit and/or a starting location identification number judgment unit. The starting threshold judgment unit is configured to determine whether the UE starts measuring the restricted network or not according to a comparison or analysis result of the absolute location information and a set starting distance threshold. The starting distance threshold may be flexibly set according to the coverage area of the restricted network or network planning, e.g., may be set as 50 m. Specifically, when the distance between the UE and the restricted network is less than or equal to the starting distance threshold, the starting threshold judgment unit determines to start measuring the restricted network.

The starting location identification number judgment unit is configured to determine whether the UE starts measuring the restricted network or not according to the identification number of the location identifiers of the macro cells obtained through comparison or analysis and a set starting identification number. The starting identification number may be determined according to the capability of the UE, e.g., may be set as 3. Specifically, when a plurality of signals of the macro cells which is adjacent to the restricted network is measured, i.e., when the number of the measured signals of the macro cells is equal to the set starting identification number, the UE starts measuring the restricted network.

In addition, when determining whether the UE starts measuring the restricted network or not, if the UE is in an idle state, the UE determines whether to start measuring the restricted network or not; whereas if the UE is in an active state, the network side determines whether the UE starts measuring the restricted network or not, and delivers corresponding instruction information.

In an embodiment, the present invention further provides a determination system for a UE measuring a restricted network. The system includes a measurement determination apparatus, configured to obtain location information of the restricted network and the UE; and determine whether the UE starts measuring the restricted network or not according to the location information.

In addition, the measurement determination apparatus may include a location information obtaining unit, a location information analysis unit, and a starting measuring judgment unit.

The location information obtaining unit is configured to obtain the location information of the restricted network and the UE. The location information analysis unit is configured to analyze the obtained location information. The starting measuring judgment unit is configured to determine whether the UE starts measuring the restricted network or not according to the analysis result.

In order to further describe the implementation of the present invention, the technical solution of the present invention is further illustrated below in combination with the specific embodiments.

### Embodiment 1

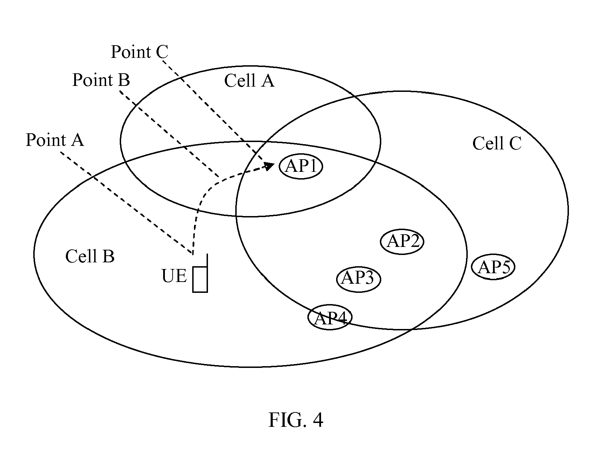

FIG. 4 is a schematic view of structures and locations of a realizing method of this embodiment, which includes three macro cells, namely, Cell A, Cell B, and Cell C, and five cell access ports AP1-AP5 of the restricted networks. The UE moves from Point A to Point C, and the restricted network cell allowed to be accessed by the UE is set as the access port AP1.

When the UE is in an idle state, if the UE supports the GPS measurement and has obtained the latitude and longitude information of the restricted network AP1, the UE periodically starts the GPS positioning of the UE itself, measures its own location information, and sets the starting distance threshold as 50 m.

Through calculating the location information of the UE measured at Point A, if a distance between the UE and the restricted network AP1 is 100 m that is greater than the starting distance threshold, the UE does not start measuring the restricted network AP1. Through calculating the location information of the UE measured at Point C, if the distance between the UE and the restricted network AP1 is less than or equal to 50 m, e.g., the distance there-between is 40 m, the UE starts measuring the restricted network AP1.

When the UE is in an active state, the network side delivers a measurement command in a measurement control message according to the capability of the UE. If the UE supports the GPS measurement, the network side instructs the UE to perform the GPS measurement. After the measurement, the UE reports the current location information to the network side through a measurement report, and then the network side determines whether the UE measures the restricted network AP1 or not according to a distance between the restricted network AP1 and the UE and further delivers a corresponding instruction command.

### Embodiment 2

FIG. 4 is still taken as an example. When the UE is in the idle state, if the UE supports the OTDOA locating technology, and has obtained the location information of the restricted network AP1, the UE starts the location measurement of the UE itself periodically by using a measurement method of the OTDOA locating technology.

Likewise, through calculating the location information of the UE measured at Point A, if the distance between the UE and the restricted network AP1 is 100 m, the UE does not start measuring the restricted network AP1. Through calculating the location information of the UE measured at Point C, if the distance between the UE and the restricted network AP1 is less than or equal to 50 m, e.g., the distance there-between is 40 m, the UE starts measuring the restricted network AP1.

When the UE is in the active state, if the UE supports the OTDOA locating technology, the network side instructs the UE to perform the OTDOA measurement. After the measurement, the UE reports the current location information to the network side through a measurement report, and then the network side determines whether to perform the measurement or not according to a distance between the restricted network AP1 and the UE and further delivers a corresponding instruction command.

### Embodiment 3

FIG. 4 is still taken as an example. The difference lies in that, in this embodiment, the occasion for the UE to measure the restricted network AP1 is determined based on a comparison of the relative location information.

When the UE is in the idle state, the UE stores the relative location information of the restricted network AP1, e.g., the identifier information of the restricted network AP1 and the neighboring macro cells Cell A, Cell B, and Cell C. The UE may start the measurement on the restricted network AP1 according to different set criteria while moving.

In Criterion 1, if the UE is set to be capable of triggering the measurement on the restricted network AP1 within the whole Cell B, i.e., the number of the found macro cells which are adjacent to the restricted network AP1 is set as one. As known from FIG. 4 that, the neighboring macro cells of the restricted network AP1 include Cell A, Cell B, and Cell C. Thus, the UE may start the measurement on the restricted network AP1 at Point A. However, because the Cell B has a coverage area much larger than that of the restricted network AP1, the UE may perform invalid measurements if the UE fails to further approach the restricted network AP1.

In Criterion 2, if the number of the found neighboring macro cells which are adjacent to the restricted network AP1 is set as two, the UE can trigger the measurement on the restricted network AP1 merely in the common coverage area of Cell B and Cell A, i.e., the UE may start the measurement on the restricted network AP1 at Point B. Obviously, in this case, the measurement area is much smaller than that in the whole Cell B, so that the redundant measurements are reduced.

In Criterion 3, if the number of the measured signals of the neighboring macro cells which are adjacent to the restricted network AP1 is set as three, the UE can trigger the measurement on the restricted network AP1 only in the common coverage area of Cell B, Cell A, and Cell C, i.e., the UE may start the measurement on the AP1 at Point C. Therefore, in this case, the smallest measurement area is provided, the highest probability for the UE to successfully measure the restricted network AP1 is reached, and the highest measurement accuracy is accomplished.

Although three criteria have been listed above, the specific criterion is selected depending upon the capability of the UE.

When the UE is in the active state, the network side instructs the UE to measure the location information of the UE itself by using the method based on the comparison of the relative location information. After the measurement, the UE reports the current location information to the network side through a measurement report, and the network side further decides whether to inform the UE to start the measurement on the AP1 or not.

In addition, according to the capability and actual demands of the UE, the aforementioned one or more locating methods may be combined together to perform the measurement and judgment of the location information.

To sum up, by the implementation of the embodiments of the present invention, the occasion for the UE to start measuring the restricted network can be correctly determined so as to reduce the blindness of the measurement, and reduce the measurement burden of the UE.

The above embodiments are merely preferred embodiments of the present invention, which are intended to describe and explain the principle of the present invention, but not to limit the implementation manners of the present invention. It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method for a User Equipment, UE, determining to measure a restricted network, **characterized by**:
obtaining (11, 12) location information of the restricted network and UE; and
determining (13) whether the UE starts measuring the restricted network or not according to the obtained location information.

2. The method according to Claim 1, wherein the location information comprises:
absolute location information, which is latitude and longitude information of the restricted network and UE on the earth.

3. The method according to Claim 2, wherein the determining whether the UE starts measuring the restricted network or not according to the obtained location information comprises:
starting, by the UE, measuring the restricted network, if a distance between the UE and restricted network is smaller or equal to a starting distance threshold, wherein the distance between the UE and restricted network is obtained according to comparing the absolute location information of the UE and restricted network.

4. The method according to Claims 2 or 3, wherein the obtaining location information of the restricted network and UE comprises:
obtaining latitude and longitude information of the restricted network by using GPS or accounting allocation information; and
obtaining latitude and longitude information of the UE by using GPS or OTDOA.

5. The method according to Claim 1, wherein the location information comprises:
relative location information of the restricted network, which is a location identifier of the restricted network; and relative location information of the UE, which is a location identifier of a current macro cell where the UE is located.

6. The method according to Claim 5, wherein the determining whether the UE starts measuring the restricted network or not according to the obtained location information comprises:
starting, by the UE, measuring the restricted network, if confirming obtaining one or more than one signal of macro cell according to the obtained location information, wherein the macro cell is adjacent to the restricted network.

7. The method according to Claims 5 or 6, wherein the relative location information comprises: PLMN ID, or Cell ID, or TA ID.

8. The method according to Claim 1, wherein after the UE starts measuring the restricted network, the method further comprises:
if the UE fails to find the restricted network within a certain period, obtaining, by the UE, a state of the restricted network according to a dedicated signal; and/or
starting, by the UE, the restricted network.

9. The method according to Claim 1, wherein the obtaining the location information of the restricted network comprises:
obtaining, by the UE, the location information of the restricted network;
wherein,
the location information of the restricted network is obtained by the restricted network through locating and measuring, and is sent to the UE by the restricted network;
the location information of the restricted network is obtained by the restricted network through locating and measuring, and is sent to the UE by the restricted network through a macro cell;
the location information of the restricted network is obtained by the restricted network through locating and measuring, and is sent to the UE by the restricted network through a CN when processing an Attach operating; or
the location information of the restricted network is input in the UE via an interface of the UE.

10. The method according to Claim 1, wherein after obtaining the location information of the restricted network and UE, the method further comprises:
if the location information of the restricted network changes,
the UE obtains the changed location information of the restricted network via an interface of the UE, or sent from a network side.

11. The method according to Claim 1, wherein the determining whether the UE starts measuring the restricted network comprises:
determining, by the UE, whether the UE starts measuring the restricted network when the UE is in idle state; and
determining, by a network side, whether the UE starts measuring the restricted network when the UE is in active state.

12. A determining apparatus for a UE measuring a restricted network **characterized by**:
a location information obtaining unit, configured to obtain location information of the restricted network and UE;
a location information analysis unit, configured to analyze the location information obtained by the location information obtaining unit; and
a starting measuring judgment unit, configured to determine whether the UE starts measuring the restricted network or not according to an analysis result of the location information analysis unit.

13. The apparatus according to Claim 12, wherein the location information obtaining unit at least comprises one of the following units:
an absolute location information obtaining unit, configured to obtain absolute location information of the restricted network and UE, which is latitude and longitude information of the restricted network and UE on the earth;
a relative location information obtaining unit, configured to obtain relative location information of the restricted network and UE, wherein the relative location information of the restricted network is a location identifier of the restricted network, and the relative location information of the UE is a location identifier of a current macro cell where the UE is located.

14. The apparatus according to Claim 12, wherein the location information analysis unit at least comprises one of the following units:
an absolute location information analysis unit, configured to obtain a distance between the restricted network and UE according to analyzing absolute location information obtained from the location information obtaining unit;
a relative location information analysis unit, configured to obtain the number of macro cells which is adjacent to the restricted network according to analyzing relative location information obtained from the location information obtaining unit.

15. The apparatus according to Claim 12, wherein the starting measuring judgment unit at least comprises one of the following units:
a starting threshold judging unit, configured to determine whether the UE measures the restricted network or not according to a distance between the restricted network and UE obtained from the location information analysis unit and a set starting distance threshold;
a starting location identifier number judging unit, configured to determine whether the UE measures the restricted network or not according to the number of macro cells obtained from the location information analysis unit and a set starting number of identifier.

16. A determining system for UE measuring restricted network, the system comprising:
a measuring determining apparatus, configured to obtain location information of the restricted network and UE, and determine whether the UE measures the restricted network according to the obtained location information.

17. The system according to Claim 16, wherein the measuring determining apparatus comprises location information obtaining unit, location information analyzing unit, and starting measuring judgment unit, wherein,
the location information obtaining unit, is configured to obtain the location information of the restricted network and UE;
the location information analyzing unit, is configured to analyze the location information of the restricted network and UE obtained from the location information obtaining unit; and
the starting measuring judgment unit, is configured to determine whether the UE starts the restricted network or not according to the analyzing result obtained from the location information analyzing unit.
